Europäisches Patentamt

European Patent Office

Office européen des brevets

(19)

(11) Numéro de publication: **0 054 487**
**B1**

(12) **FASCICULE DE BREVET EUROPEEN**

(45) Date de publication du fascicule du brevet:
**29.08.84**

(21) Numéro de dépôt: **81401977.4**

(22) Date de dépôt: **10.12.81**

(51) Int. Cl.³: **F 16 B 21/14**

(54) Goupille pour axe ou élément analogue, notamment pour matériel agricole.

(30) Priorité: **17.12.80 FR 8026810**
**06.03.81 FR 8104555**

(43) Date de publication de la demande:
**23.06.82 Bulletin 82/25**

(45) Mention de la délivrance du brevet:
**29.08.84 Bulletin 84/35**

(84) Etats contractants désignés:
**AT BE CH DE GB IT LI LU NL SE**

(56) Documents cités:
**DE - A - 1 625 300**
**FR - A - 2 208 471**
**FR - A - 2 400 138**
**US - A - 2 759 388**
**US - A - 3 658 369**
**US - A - 4 036 097**

(73) Titulaire: **Defrancq, Hubert, 7, rue Guillaume Apollinaire,
F-51100 Reims (FR)**

(72) Inventeur: **Defrancq, Hubert, 7, rue Guillaume
Apollinaire, F-51100 Reims (FR)**

(74) Mandataire: **Michardière, Bernard et al, Cabinet
Plasseraud 84, rue d'Amsterdam, F-75009 Paris (FR)**

BUNDESDRUCKEREI BERLIN

## Description

L'invention est relative à une goupille pour axe, ou élément analogue, du genre de celles qui sont équipées d'une boucle et de moyens d'articulation de cette boucle sur la goupille, de telle sorte que ladite boucle puisse être rabattue de manière à entourer l'axe, ou élément analogue, dans lequel est engagé la goupille, afin de s'opposer à une extraction de ladite goupille.

Selon un premier aspect, l'invention concerne les goupilles du genre en question dans lesquelles les moyens d'articulation de la boucle sont agencés de manière à pouvoir prendre au moins deux positions à savoir une première position ou position »basse« telle que la goupille puisse passer dans ladite boucle et une deuxième position ou position »haute« telle que la goupille ne puisse passer à travers la boucle, l'extrémité de la goupille opposée aux moyens d'articulation venant alors en butée contre une partie de la boucle, lesdits moyens d'articulation comprenant un palier mobile susceptible d'être placé au moins dans les deux susdites positions, palier dans lequel est engagé un axe d'articulation solidaire de la boucle.

Le brevet US-A-2 759 388 montre une goupille de ce type dans laquelle les moyens d'articulation comprennent un palier d'articulation pour la boucle situé dans une tête en forme de bloc cylindrique, recouvrant une extrémité de la goupille et pouvant coulisser suivant l'axe de cette goupille. Cette tête est soumise à l'action d'un ressort qui entoure une partie de la goupille. Cette construction est relativement compliquée et encombrante.

Le but de l'invention est de rendre les goupilles de ce genre telles qu'elles soient d'une fabrication plus simple, d'un encombrement réduit et d'une robustesse accrue.

Selon l'invention, une goupille du genre défini précédemment, dans laquelle les moyens d'articulation de la boucle sont agencés de manière à pouvoir prendre au moins deux positions à savoir une première position telle que la goupille puisse passer dans ladite boucle et une deuxième position telle que la goupille ne puisse passer à travers cette boucle, l'extrémité de la goupille opposée aux moyens d'articulation venant alors en butée contre une partie de la boucle, lesdits moyens d'articulation comprenant un palier mobile susceptible d'être placé au moins dans les deux susdites positions, palier dans lequel est engagé un axe d'articulation solidaire de la boucle, est caractérisée par le fait que le palier est supporté par deux bras sensiblement parallèles, l'ensemble étant tel que pour la deuxième position ou position »haute« les bras s'étendent d'un côté qui éloigne le palier au maximum de l'extrémité opposée de la goupille, tandis que pour la première position ou position »basse«, les susdits bras ont tourné par rapport à la position »haute«.

Avantageusement, les deux bras supportant le palier sont articulés sur la goupille.

De préférence, les deux bras s'étendent, pour la deuxième position, ou position »haute«, sensiblement selon la direction longitudinale de la goupille.

Les deux bras peuvent être articulés sur la goupille dans des logements décalés suivant un plan sensiblement orthogonal à un plan équidistant des deux bras lorsqu'ils occupent la position »haute« de telle sorte que des moyens de maintien sont formés par la combinaison de ce décalage des logements et de l'élasticité des bras.

Le palier peut être réalisé par enroulement d'un fil en spires jointives, les deux bras étant solidaires du palier et étant formés par deux prolongements rectilignes du fil aux deux extrémités du palier.

Selon une autre possibilité, les deux bras supportant le palier sont ancrés à une de leurs extrémités sur la goupille, ces bras étant déformables en flexion de manière à permettre un déplacement du palier entre la position »basse« et la position »haute«, les susdits bras constituant, en outre, les moyens de maintien du palier en position »haute« par suite de leur élasticité en flexion.

Selon un mode de réalisation préféré, l'invention a pour but de fournir une goupille du genre défini précédemment dont la résistance au cisaillement, engendré par les efforts d'arrêt axial, ne soit pas sensiblement modifiée, même si l'extrémité de la goupille munie des moyens d'articulation vient à s'écarter de l'axe sur lequel est montée la goupille, notamment par suite d'une rotation de cet axe.

Selon ce mode de réalisation, une goupille pour axe, ou élément analogue, du genre défini précédemment est caractérisée par le fait que la partie de la boucle, éloignée des moyens d'articulation, a une forme telle que lorsque la goupille est engagée dans l'axe et que la boucle a été rabattue autour de cet axe, ladite partie de la boucle éloignée des moyens d'articulation est propre à venir en butée contre l'axe et à maintenir l'extrémité de la goupille, éloignée des moyens d'articulation, à une distance suffisante de la surface extérieure de l'axe, pour le cas où la goupille viendrait à se déplacer, suivant sa direction longitudinale, dans un sens qui éloigne les moyens d'articulation de l'axe.

La goupille comporte, avantageusement, vers son extrémité éloignée des moyens d'articulation, un évidement ou encoche propre à recevoir une zone de la boucle lorsqu'elle est rabattue; la forme de la susdite partie de partie de la boucle éloignée des moyens d'articulation est telle que la venue en butée de cette partie de la boucle contre l'axe permet de maintenir l'évidement à une distance suffisante (vers l'extérieur) de la surface de l'axe, lors d'un déplacement éventuel de la goupille suivant sa direction longitudinale.

De préférence, la forme de la susdite partie de la goupille est telle que le bord de l'évidement le plus proche de l'axe soit maintenue à une distance d'au moins 5 millimètres de la surface de l'axe.

La susdite partie de la boucle éloignée des moyens d'articulation peut former une sorte d'excroissance, vers l'extérieur, par rapport à la ligne générale du contour moyen de la boucle, cette excroissance de raccordant à la boucle par deux arcs tournant leur concavité vers l'extérieur, ces arcs étant propres à venir en appui, par leur partie convexe, contre la surface de l'axe.

Selon une autre possibilité, la susdite partie de la boucle éloignée des moyens d'articulation forme un angle aigu, notamment à sommet arrondi, et se raccorde, par deux arcs tournant leur convexité vers l'extérieur, à deux parties rectilignes de la boucle, parallèles à l'axe géométrique de la goupille.

Un domaine d'application plus particulièrement intéressant, mais non limitatif, des goupilles selon l'invention est celui des goupilles de forte section utilisées pour le matériel agricole.

L'invention consiste, mises à part les dispositions exposées ci-dessus, en certaines autres dispositions dont il sera plus explicitement question ci-après à propos de modes de réalisation particuliers décrits avec référence aux dessins ci-annexés, mais qui ne sont nullement limitatifs.

La fig. 1, de ces dessins, est une vue en élévation d'une goupille conforme à l'invention, engagée dans un axe, avec les moyens d'articulation de la boucle en position »haute«.

La fig. 2 est une vue de droite par rapport à la fig. 1, avec partie coupée.

La fig. 3 est une vue en élévation de la goupille avec les moyens d'articulation en position »basse«.

Les fig. 4 à 6 illustrent schématiquement la mise en place de la goupille, vue de droite par rapport à la fig. 1.

La fig. 7 montre, semblablement à la fig. 1, une variante de réalisation de la goupille.

La fig. 8 est une vue de droite par rapport à la fig. 7.

La fig. 9 montre, semblablement à la fig. 1, une goupille engagée sur un axe, réalisée conformément au second aspect de l'invention.

La fig. 10 est une vue en élévation dans laquelle l'axe a tourné d'un demi-tour par rapport à la fig. 9.

La fig. 11 est une vue de droite par rapport à la fig. 10, avec partie coupée.

La fig. 12 est une vue schématique d'une variante de réalisation de la a goupille.

La fig. 13, enfin, est une vue à plus grande échelle, semblable à la fig. 9, d'une autre variante de réalisation.

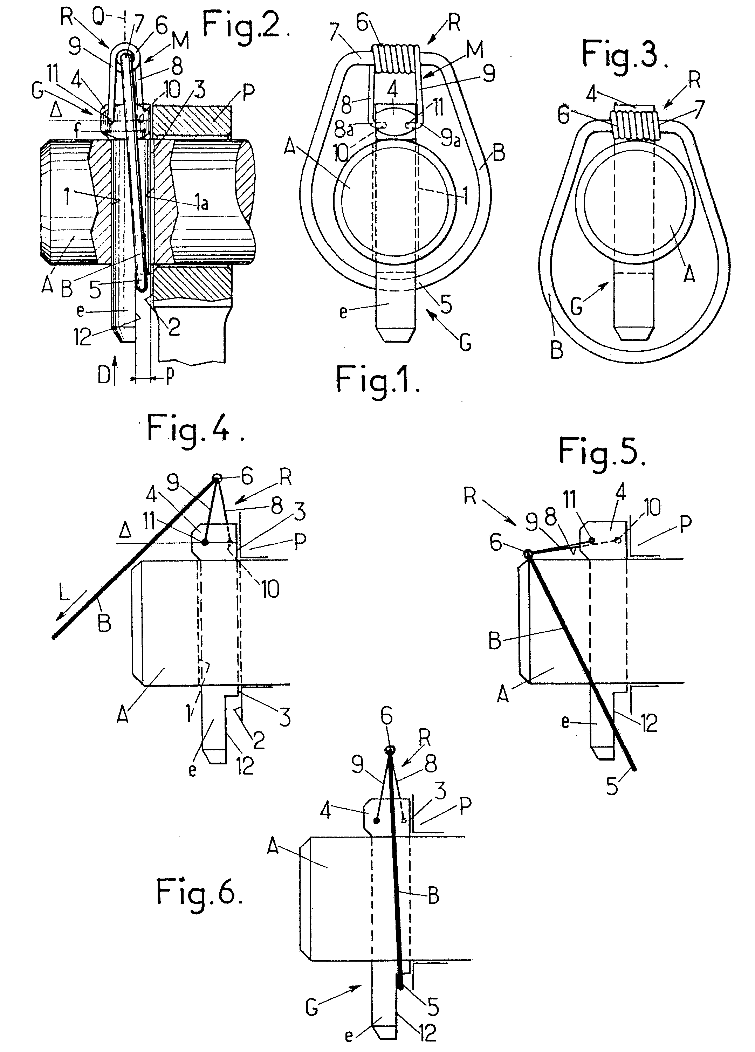

En se reportant aux dessins, notamment aux fig. 1 à 3, on peut voir une goupille G pour un axe A, ou un arbre ou un élément analogue. La goupille G est destinée, d'une manière classique, à arrêter l'axe A par rapport à une pièce P (fig. 2) comportant un alésage traversé par l'axe A. Cet axe comporte un trou diamétral 1 prévu de telle sorte que, lorsque l'axe A traverse la pièce P et occupe la position normalement prévue, le trou 1 est situé entièrement à l'extérieur de la pièce P, la génératrice 1a de ce trou, voisine de la pièce P, étant située dans le plan de la face 2 ou légèrement à l'extérieur de ce plan.

La goupille G a une forme générale cylindrique de révolution mais présente une face plane 3 destinée à venir au voisinage ou au contact de la face transversale 2 de la pièce P, afin de permettre une insertion plus facile.

La goupille G est équipée d'une boucle B notamment formée par un fil d'acier, et de moyens d'articulation R de cette boucle, laquelle peut être rabattue, après mise en place de la goupille G, autour de l'axe A. On voit ainsi que la boucle B en coopérant avec l'axe A s'oppose à une extraction de la goupille G suivant le sens D matérialisé par une flèche sur la fig. 2.

Il est à noter que la goupille G comporte une tête 4 de plus forte section sur laquelle est articulée la boucle B. Cette tête 4 s'oppose à un enfoncement trop important de la goupille G dans le trou suivant le sens opposé à D.

Les moyens d'articulation R sont agencés de manière à pouvoir prendre au moins deux positions, à savoir une première position ou position »basse«, représentée sur la fig. 3, pour laquelle la goupille G peut passer dans la boucle B, et une deuxième position ou position »haute« représentée sur les fig. 1 et 2 pour laquelle la goupille G ne peut passer à travers la boucle B et vient en butée par son extrémité e contre la partie 5 de la boucle opposée aux moyens d'articulation.

Il est à noter que, pour simplifier, on considère que les moyens d'articulation peuvent prendre au moins deux positions telles que définies précédemment. Toutefois, le déplacement des moyens d'articulation entre ces deux positions peut s'effectuer, généralement, de manière continue, de telle sorte que les moyens d'articulation prennent une succession de positions différentes. L'expression position »haute« peut donc englober un ensemble de positions pour lesquelles la goupille ne peut passer à travers la boucle, tandis que l'expression position »basse« englobe un ensemble de positions pour lesquelles la goupille peut passer à travers la boucle.

Selon le mode de réalisation des fig. 1 à 3, les moyens d'articulation R comprennent un palier mobile 6 dans lequel est engagé un axe d'articulation 7 solidaire de la boucle, le diamètre intérieur du palier 6 étant sensiblement égal à celui de l'axe 7. Le palier 6 est formé par un fourreau obtenu par l'enroulement en spires jointives d'un fil, notamment d'un fil d'acier à ressort; l'axe 7 est formé par les deux extrémités voisines, repliées dans l'alignement l'une de l'autre, de la boucle B; ces extrémités sont engagées dans le palier 6.

Ce palier est supporté par deux bras 8, 9, sensiblement parallèles, articulés sur la tête 4 de la goupille.

Les deux bras 8, 9, sont solidaires du palier 6 et constituent des prolongements rectilignes des deux spires extrêmes de ce palier. Les extrémités 8a, 9a des bras sont repliées sensiblement à angle droit et sont engagées dans des logements 10, 11 prévus de chaque côté de la tête 4. Ces logements 10, 11 sont décalés l'un par rapport à l'autre, d'une distance f, comme visible sur la fig. 2, suivant un plan A orthogonal au plan Q équidistant des deux bras 8, 9 lorsqu'ils occupent leur position »haute«. Les deux logements 10, 11, ont leurs axes parallèles à l'intersection des plans Q et $\Delta$.

Les deux bras 8, 9, présentent une élasticité en flexion et, du fait du décalage des logements 10, 11 exercent un effort de rappel élastique du palier 6 vers la position »haute« représentée sur la fig. 1.

Lorsque l'on fait tourner le palier 6, suivant le sens contraire des aiguilles d'une montre, selon la représentation de la fig. 2, les bras 8 et 9 se déforment et exercent un effort de rappel vers la position »haute«, aussi longtemps que le plan moyen des bras 8, 9, n'a pas franchi le plan $\Delta$ passant par les axes des logements 10 et 11.

Lorsque le plan moyen des bras 8, 9, franchit le plan des axes des logements 10, 11, le couple engendré par la déformation élastique des bras 8, 9 a tendance à faire tourner les bras et le palier 6 dans le sens contraire des aiguilles d'une montre vers le bas, toujours selon la représentation de la fig. 2.

La combinaison du décalage des logements 10, 11 et de l'élasticité de l'ensemble des bras 8, 9 et du palier 6 constitue des moyens de maintien M de ce palier 6 dans sa position »haute«.

La goupille G comporte, à son extrémité e opposée à celle munie des moyens d'articulation, un évidement 12 (ou une encoche) bien visible sur la fig. 2, et situé du côté de la face 3 de manière à venir au voisinage de la face transversale de la pièce P. Ce logement 12 est propre à recevoir la partie de la boucle 5, tout en lui servant de butée, de telle sorte que ladite partie 5 ne fasse se pas saillie par rapport à la face 3. Cette encoche 12 pourrait être remplacée par un simple biseau.

La boucle B est généralement une boucle ouverte dont les deux extrémités sont pratiquement jointives et logées à l'intérieur du palier 6. Il est possible, toutefois, de réaliser la boucle B sous forme de boucle fermée par exemple en soudant les extrémités voisines après leur introduction dans le palier 6. La forme de la boucle B peut être circulaire ou sensiblement elliptique ou ovale avec son grand axe orienté suivant la direction longitudinale de la goupille G.

Ceci étant, la mise en place et l'extraction de la goupille s'effectue de la manière suivante décrite surtout avec référence aux fig. 4 à 6.

Les moyens d'articulation R étant en position »haute« (ou deuxième position) comme représenté sur la fig. 4, la goupille est introduite dans le trou 1, l'axe A ayant été convenablement positionné par rapport à la pièce P. La face plane 3 de la goupille est située au voisinage de la face transversale 2. La goupille G est enfoncée jusqu'à venue en butée de la tête 4 contre la surface de l'axe A. L'extrémité de la goupille G opposée à la tête 4 fait alors saillie hors du trou 1, du côté opposé, le logement 12 étant situé entièrement à l'extérieur de l'axe A.

On exerce alors sur les bras 8 et 9 un moment de rotation, qui, selon la représentation de la fig. 4, a pour effet de faire tourner ses bras 8 et 9 ainsi que le palier 6 dans le sens contraire des aiguilles d'une montre autour des axes des logements 10 et 11. Ce moment de rotation peut être, obtenu, par exemple, en exerçant une poussée sur le palier 6 suivant une direction L inclinée vers le bas par rapport au plan $\Delta$. Ce palier 6 présente, avantageusement, une forme offrant une surface suffisante pour l'exercice manuel de cette poussée.

Comme expliqué précédemment, lorsque les bras 8 et 9 ont tourné d'environ 90° par rapport à la position »haute« de la fig. 2, le plan moyen de ces bras franchit le plan $\Delta$ passant par les axes des logements 10 et 11; les bras 8 et 9 déformés élastiquement exercent un couple entraînant le palier 6, selon la représentation des fig. 4 et 5, dans le sens contraire des aiguilles d'une montre, vers le bas. Le palier 6 sera arrêté par venue en butée contre l'axe A, ce qui correspond à la position »basse« des moyens d'articulation (fig. 5).

Il convient de noter, à ce sujet, que les dimensions de la goupille, de la boucle B et des bras 8 et 9 sont choisies généralement, de telle sorte que la goupille G puisse passer à travers la boucle B dès que les bras 8 et 9 ont tourné d'au moins 90° par rapport à la position »haute« représentée sur la fig. 2. On peut donc considérer que la première position ou position »basse« est formée par une position quelconque des moyens d'articulation décalée d'au moins 90° par rapport à la position »haute« de la fig. 2.

La position des moyens d'articulation correspond ainsi à celle représentée sur la fig. 5. Il est alors possible de rabattre la boucle B en la faisant tourner, selon la représentation de la fig. 5, dans le sens contraire des aiguilles d'une montre autour du palier 6. La boucle B vient entourer l'axe A; en outre, la goupille G peut passer à travers la boucle B de telle sorte que la partie 5 de cette boucle opposée aux moyens d'articulation peut être amenée, comme représenté sur la fig. 5, au-delà de l'extrémité e de la goupille faisant saillie du côté de l'axe A opposé à la tête 4.

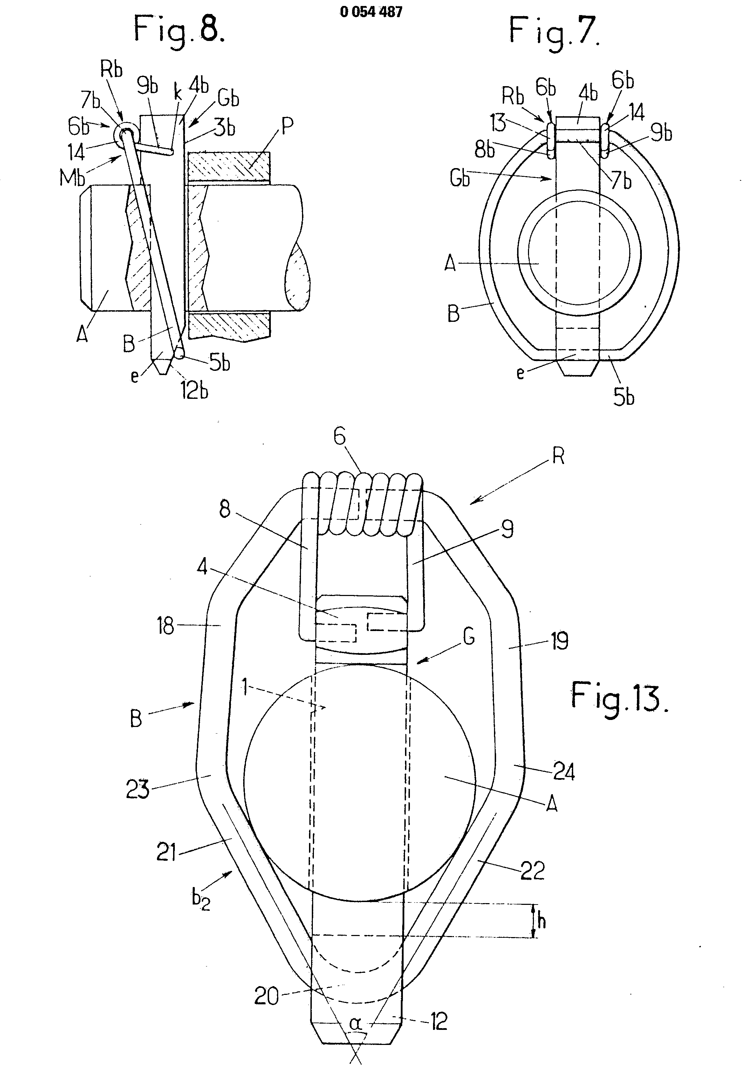

On provoque, ensuite, le retour des moyens d'articulation R à la position »haute«, comme représenté sur la fig. 6. La partie de la boucle 5 passée de l'autre côté de la goupille G remonte le long de la goupille G dans l'évidement 12. On voit que l'extrémité e de la goupille constitue une butée s'opposant à l'ouverture de la boucle B; une telle ouverture, selon la représentation de la fig. 6 nécessite un mouvement de rotation de la boucle B autour du palier 6, suivant le sens des aiguilles d'une montre.

Le verrouillage est effectué dans de bonnes conditions, puisque le palier 6 restera dans la position »haute« en raison de l'action des moyens de maintien. Si la boucle B est accrochée par un obstacle, la goupille G s'oppose à l'ouverture de la boucle.

Pour l'extraction de la goupille G, il faudra exercer sur le palier 6 et les bras 8 et 9 un moment de rotation dans le sens contraire des aiguilles d'une montre, selon la représentation de la fig. 6, de telle sorte que les bras 8 et 9 et le palier 6 reprennent la position de la fig. 5. Il est alors possible de faire passer à nouveau la goupille G à travers la boucle B et de dégager la partie 5 de cette boucle de l'extrémité e. Le mouvement d'ouverture de la boucle est poursuivi de manière que cette boucle n'entoure plus l'axe A. Il est alors possible d'extraire la goupille G en exerçant une traction suivant le sens D.

Il est à noter que, de préférence, la profondeur p (fig. 2) de l'évidement 12, c'est-à-dire la dimension de cet évidement suivant la direction parallèle à l'axe géométrique de l'axe A, est au moins égale au diamètre du fil constituant la boucle B de telle sorte que cette boucle ne fasse pas saillie sur la face 3 lorsque la partie 5 est engagée dans l'évidement 12.

En se reportant aux fig. 7 et 8, on peut voir une variante de réalisation de la goupille $G_b$.

Les parties de cette goupille identiques ou jouant des rôles semblables à des parties déjà décrites sur les fig. 1 à 3 sont désignées par les mêmes références éventuellement suivies de la lettre b; la description de ces parties ne sera pas reprise ou sera effectuée très brièvement.

Les deux bras 8b, 9b, portant le palier 6b sont ancrés, à une de leurs extrémités désignées par k sur la fig. 8, sur la tête 4b de la goupille. Ces deux bras 8b, 9b, encadrent la tête de la goupille. L'ancrage de leur extrémité sur la goupille peut être assuré par soudage.

Dans la réalisation des fig. 7 et 8, les deux bras 8b, 9b ne sont pas reliés l'un à l'autre; le palier 6b est formé par l'ensemble de deux boucles 13, 14 écartées l'une de l'autre et formées par enroulement de l'extrémité des bras 8b, 9b, opposée à celle ancrée sur la goupille. L'axe d'articulation 7b de la boucle B traverse ces deux boucles 13, 14 comme visible sur la fig. 7.

Selon une variante, les deux bras 8b, 9b, pourraient être reliés l'un à l'autre par une branche transversale s'étendant entre les boucles 13, 14, l'ensemble étant obtenu à partir d'un seul fil plié et enroulé convenablement.

Les bras 8b, 9b, sont déformables en flexion, de manière à permettre un déplacement du palier, c'est-à-dire des boucles 13, 14 entre la position »haute« représentée sur la fig. 8 et la position »basse« (non représentée). Cette position »basse« correspond à une rotation des boucles 13, 14, suivant les sens contraire des aiguilles d'une montre autour de l'extrémité k, selon la représentation de la fig. 8.

On voit que dans la position »haute«, les bras 8b, 9b sont situés légèrement au-dessus du plan perpendiculaire à l'axe de la goupille, passant par l'extrémité k.

En position »basse«, les bras 8b, 9b s'étendent au-dessous de ce plan de telle sorte que l'extrémité 5b de la boucle B soit dégagée totalement de la goupille $G_b$ qui peut passer à travers cette boucle. Les bras 8b, 9b, par suite de leur élasticité en flexion forment les moyens de maintien $M_b$ du palier en position »haute«. L'évidement 12b prévu pour recevoir la partie 5b de la boucle est formé par un simple biseau, comme visible sur la fig. 8.

La mise en place, le verrouillage, le déverrouillage et l'extraction de la goupille $G_b$ des fig. 7 et 8 s'effectuent d'une manière semblable à celle expliquée avec référence aux fig. 1 à 6.

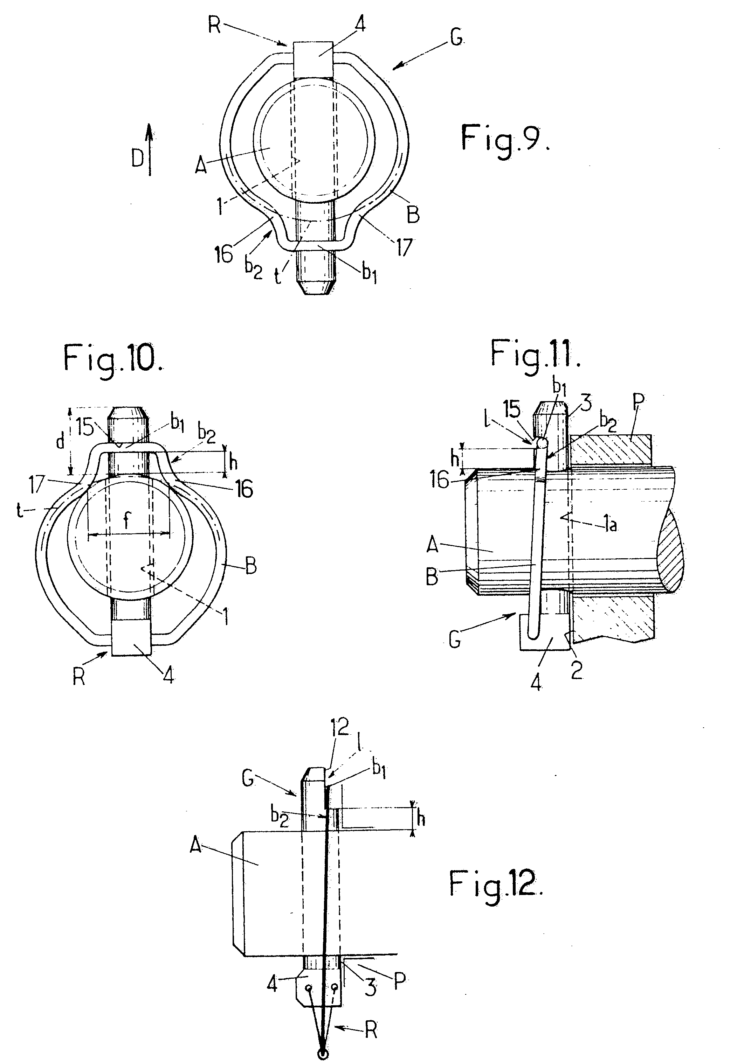

En se reportant aux fig. 9 à 13, on peut voir une goupille G conforme au deuxième aspect de l'invention. Les parties de cette goupille semblables à des parties déjà décrites précédemment sont désignées par les mêmes références sans que leur description soit reprise.

Généralement, l'agencement des moyens d'articulation R est tel qu'une force s'exerce sur la boucle B pour la maintenir dans la position rabattue autour de l'axe A représentée sur la fig. 1.

La goupille G comporte, vers son extrémité éloignée des moyens d'articulation R, un évidement ou encoche I propre à recevoir une zone b1 de la boucle B lorsqu'elle est rabattue.

Dans le mode de réalisation des fig. 9 à 11, l'évidement I est formé par une encoche 15 située du côté de la goupille G opposé à la face plane 3, c'est-à-dire du côté éloigné de la face 2 de la pièce P. Selon ce mode de réalisation, les moyens d'articulation R sont avantageusement disposés de manière à engendrer une déformation de la boucle B afin de produire, sur cette boucle, un moment de rotation ayant tendance à appliquer la zone b1 dans l'encoche 15.

Selon le mode de réalisation de la fig. 12, l'évidement I est formé par l'échancrure 15 prévue dans la face place de la goupille, adjacente à la face 2 de la pièce P; les moyens d'articulation R sont alors agencés de manière à permettre à la boucle B de franchir la goupille G, comme prévue pour les fig. 1 à 8.

La fig. 9 illustre la position normale d'introduction de la goupille G dans l'axe A c'est-à-dire que l'axe du trou 1 est généralement vertical et que la goupille est introduite de telle sorte que la tête 4 se trouve au-dessus de l'axe A et vienne s'appuyer contre cet axe.

Selon ce deuxième aspect de l'invention, la partie b2 de la boucle B, éloignée des moyens d'articulation R, a une forme telle que lorsque la goupille G est engagée dans l'axe A et que la boucle B a été rabattue autour de cet axe, ladite partie b2 de la boucle est propre à venir en butée contre l'axe et à maintenir l'extrémité de la goupille G, opposée aux moyens d'articulation R, à une distance d suffisante de la surface extérieure de l'axe A, pour le cas où la goupille G se déplacerait par coulissement suivant sa direction longitudinale.

Plus précisément, dans le cas où la goupille G comporte un évidement I, ladite partie b2 de la boucle est propre, en venant en butée contre l'axe A, à maintenir le bord de l'évidement I le plus proche de l'axe A à une distance suffisante h (voir fig. 10, 11 et 12) de cet axe A. Par distance suffisante h on désigne une distance telle que les contraintes de cisaillement engendrées par les efforts d'arrêt axial s'exerçant sur la goupille G venant en butée contre la face 2 soient faibles au niveau de la section de la goupille G amoindrie par la présence de l'évidement I. On peut indiquer que la distance h est de l'ordre de 5 mm au moins.

Pour le cas où l'axe A viendrait à tourner d'un demi-tour par rapport à la position qu'il occupe sur la fig. 9, la goupille G se retrouverait avec la tête 4 au-dessous de l'axe A comme représenté sur la fig. 10; dans cette position, la goupille G aurait tendance à se déplacer vers le bas; on voit immédiatement que la partie b2, en venant au contact de l'axe A, retient la goupille G de telle sorte que l'évidement I reste suffisamment éloigné vers l'extérieur, de l'axe A. Il en résulte que les efforts de cisaillement auxquels la goupille G peut être soumise, du fait de son rôle d'arrêt axial, n'interviendront pas au niveau des zones de section amoindrie de la goupille G. La même remarque s'applique pour le mode de réalisation de la fig. 12 dans lequel la boucle B comporte une partie b2 semblable à celle des fig. 9 à 11.

Cette partie b2 forme une sorte d'excroissance, vers l'extérieur, par rapport au prolongement t du contour moyen de la boucle B. Cette excroissance se raccorde au contour moyen de la boucle B par deux arcs 16, 17 tournant leur concavité vers l'extérieur. Ces arcs 16, 17 sont propres à venir en butée contre l'axe A par leur partie convexe, comme visible sur la fig. 10.

Les arcs 16 et 17 se raccordent à la zone b1, qui peut être sensiblement rectiligne, destinée à entrer dans l'évidement I.

La distance f (fig. 10), suivant une direction orthogonale à la direction longitudinale de la goupille, entre les zones de contact des arcs 16 et 17 avec l'axe A est choisie de manière à permettre une mise en place de la zone b1 dans le logement I, sans difficulté.

La partie b2 est, de préférence, symétrique ou sensiblement symétrique par rapport au plan passant par l'axe longitudinal de la goupille G et l'axe géométrique de l'axe A.

Grâce à l'invention, les conditions de travail de la goupille G, notamment lorsque l'axe A vient à tourner d'un demi-tour par rapport à la position normale représentée sur la fig. 9, sont nettement améliorées et permettent d'éviter une détérioration prématurée de cette goupille.

Il n'en serait pas de même dans le cas où le contour moyen de la boucle B se prolongerait suivant la ligne t. En effet, pour les positions des fig. 10 à 12, la goupille G prendrait une position pour laquelle la tête 4 serait plus basse; l'évidement I et donc la zone de section amoindrie de la goupille G se trouveraient sensiblement au niveau de la zone de butée contre la face 2, au voisinage de la surface extérieure de l'axe A.

En se reportant à la fig. 13, on peut voir une variante de réalisation dans laquelle les éléments jouant des rôles identiques ou analogues à des éléments déjà décrits aux fig. 9 à 12 sont désignés par les mêmes références, sans que leur description soit reprise en détail.

La boucle B de la fig. 13 comprend deux parties rectilignes 18, 19 parallèles à l'axe géométrique de la goupille; la susdite partie b2 de la boucle éloignée des moyens d'articulation R forme un angle $\alpha$, aigu notamment à sommet 20 arrondi lorsque l'évidement I est formé par une échancrure 12 semblable à celle de la fig. 12. Les deux côtés rectilignes 21, 22 de cet angle aigu se raccordent, aux susdites parties 8, 9, par deux arcs 23, 24, tournant leur convexité vers l'extérieur.

La forme de la boucle B est telle que la venue en contact des côtés 21, 22 avec l'axe A maintient le bord de l'échancrure 12 le plus proche de l'axe à une distance suffisante h de la surface de cet axe.

Les moyens d'articulation R représentés sur la fig. 13 sont agencés de manière à pouvoir prendre une position »basse«, telle que la goupille puisse passer dans la boucle B et une position »haute« telle que la goupille ne puisse passer à travers la boucle. La fig. 13 représente les moyens d'articulation R en position »haute«.

La susdite partie b2 de la boucle éloignée des moyens d'articulation R est agencée de manière à venir au contact, ou sensiblement au contact de l'axe 2, alors que la tête 4 de la goupille est elle-même en appui contre cet axe, les moyens R étant en position »haute«. La variante de réalisation de la fig. 13 présente donc les avantages déjà soulignés précédemment tout en assurant un verrouillage complet de la goupille G suivant sa direction axiale.

Il est clair, d'après les explications qui précèdent que la boucle B peut présenter des formes variables; il suffit que ces formes répondent aux conditions définies précédemment.

Quel que soit le mode de réalisation, la goupille de l'invention est d'une fabrication simple et sa mise en place ainsi que son extraction restent faciles. Le verrouillage de cette goupille est assuré efficacement. Son efficacité n'est pas altérée par une usure éventuelle due à une utilisation répétée.

**Revendications**

1. Goupille pour axe, ou élément analogue, équipée d'une boucle (B) et de moyens d'articulation (R) de la boucle (B) sur la goupille (G) de telle sorte que ladite boucle (B) puisse être rabattue de manière à entourer l'axe (A), ou élément analogue, dans lequel est engagée la goupille (G), afin de s'opposer à une extraction de ladite goupille, les moyens d'articulation (R) de la boucle (B) étant agencés de manière à pouvoir prendre au moins deux positions à savoir une première position ou position »basse« telle que la goupille (G) puisse passer dans la dite boucle (B) et une deuxième position ou position »haute« telle que la goupille (G) ne puisse passer à travers la boucle (B), l'extrémité (e) de la goupille (G) opposée aux moyens d'articulation (R) venant alors en butée contre une partie de la boucle (B), lesdits moyens d'articulation (R) comprenant un palier mobile (6, 6b) susceptible d'être placé au moins dans les deux susdites positions, palier (6, 6b) dans lequel est engagé un axe d'articulation (7) solidaire de la boucle (B), caractérisée par le fait que le palier (6, 6b) est supporté par deux bras (8, 9, 8b, 9b) sensiblement parallèles, l'ensemble étant tel que pour la deuxième position ou position »haute« les bras (8, 9, 8b, 9b) s'étendent d'un côté qui éloigne le palier (6, 6b) au maximum de l'extrémité opposée (e) de la goupille, tandis que pour la première position »basse«, les susdits bras (8, 9, 8b, 9b) ont tourné par rapport à la position »haute«.

2. Goupille selon la revendication 1, caractérisée par le fait que les deux bras (8, 9) supportant le palier (6) sont articulés sur la goupille (G).

3. Goupille selon la revendication 2, caractérisée par le fait que les deux bras (8, 9) s'étendent, pour la deuxième position ou »position haute«, sensiblement selon la direction longitudinale de la goupille.

4. Goupille selon la revendication 2 ou 3, caractérisée par le fait que les deux bras (8, 9) sont articulés sur la goupille dans des logements (10, 11) décalés suivant un plan ($\Delta$) sensiblement orthogonal à un plan (Q) équidistant des deux bras lorsqu'ils occupent la position »haute« de telle sorte que les moyens de maintien (M) sont formés par la combinaison de ce décalage des logements (10, 11) et de l'élasticité des bras (8, 9).

5. Goupille selon l'une quelconque des revendications précédentes, caractérisée par le fait que le palier (6) est réalisé par enroulement d'un fil en spires jointives, les deux bras (8, 9) étant solidaires du palier et étant formés par deux prolongements rectilignes du fil aux deux extrémités du palier.

6. Goupille selon la revendication 1, caractérisée par le fait que les deux bras (8b, 9b) supportant le palier (6b) sont ancrés à une de leurs extrémités (k) notamment par soudage, sur la goupille (Gb), ces bras (8b, 9b) étant déformables en flexion de manière à permettre un déplacement du palier entre la position »basse« et la position »haute«, les susdits bras constituant, en outre, les moyens de maintien (Mb) du palier (6b) en position »haute« par suite de leur élasticité en flexion.

7. Goupille selon l'une quelconque des revendications précédentes, caractérisée par le fait que pour la première position ou position »basse«, les bras (8, 9; 8b, 9b) ont tourné d'environ 90° ou plus par rapport à la position »haute«.

8. Goupille selon l'une quelconque des revendications précédentes, caractérisée par le fait qu'elle comporte, à son extrémité (e) opposée à celle munie des moyens d'articulation, un évidement ou encoche (12, 12b, 12c) propre à servir de butée et de logement à une partie (5, 5b, 5c) de ladite boucle (B) lorsque la goupille (G, Gb, Gc) a traversé cette boucle et que les moyens d'articulation ont été ramenés dans leur position »haute«.

9. Goupille selon la revendication 1, caractérisée en ce que la partie (b2) de la boucle (B) éloignée des moyens d'articulation (R), a une forme telle que, lorsque la goupille (G) est engagée dans l'axe (A) et que la boucle a été rabattue autour de cet axe, ladite partie (b2) de la boucle éloignée des moyens d'articulation est propre à venir en butée contre l'axe (A), et à maintenir l'extrémité de la goupille, éloignée des moyens d'articulation (R), à une distance suffisante (d) de la surface extérieure de l'axe, pour le cas où la goupille viendrait à se déplacer, suivant sa direction longitudinale, dans un sens qui éloigne les moyens d'articulation (R) de l'axe (A).

10. Goupille selon la revendication 9, comportant, vers son extrémité éloignée des moyens d'articulation, un évidement ou encoche propre à recevoir une zone de la boucle lorsqu'elle est rabattue, caractérisée par le fait que la forme de la susdite partie (b2) de la boucle éloignée des moyens d'articulation (R) est telle que la venue en butée de cette partie (b2) de la boucle contre l'axe (A) permet de maintenir l'évidement (I) à une distance (h) suffisante, vers l'extérieur, de la surface de l'axe (A), lors d'un déplacement éventuel de la goupille (G) suivant sa direction longitudinale.

11. Goupille selon la revendication 10, caractérisé par le fait que la forme de la susdite partie (b2) de la boucle est telle que le bord de l'évidement (I) le plus proche de l'axe est maintenu à une distance (h) d'au moins cinq millimètres de la surface de l'axe (A).

12. Goupille selon l'une quelconque des revendications 9 à 11, caractérisée par le fait que la partie (b2) de la boucle éloignée des moyens d'articulation est symétrique ou sensiblement symétrique par rapport au plan passant par l'axe longitudinal de la goupille (G) et l'axe géométrique de l'axe (A).

13. Goupille selon la revendication 10, caractérisée par le fait que la boucle (B) comporte une zone (b1) sensiblement rectiligne, destinée à entrer dans l'évidement (I).

14. Goupille selon l'une quelconque des revendications 9 à 13, caractérisée par le fait que la partie (b2) de la boucle éloignée des moyens d'articulation (R) forme une sorte d'excroissance, vers l'extérieur, par rapport à la ligne générale (t) du contour moyen de la boucle, cette excroissance se raccordant à la boucle par deux arcs (16, 17) tournant leur concavité vers l'extérieur, ces arcs étant propres à venir en appui, par leur partie convexe, contre la surface de l'axe (A).

15. Goupille selon l'une quelconque des revendications 9 à 14, caractérisée par le fait que la partie (b2) de la boucle éloignée des moyens d'articulation forme un angle aigu (α) et se raccorde par deux arcs (23, 24) tournant leur convexité vers l'extérieur, à deux parties rectilignes (18, 19) de la boucle parallèles à l'axe géométrique de la goupille.

16. Goupille selon la revendication 15 et dans laquelle les moyens d'articulation de la boucle sont agencés de manière à pouvoir prendre une position »basse« telle que la goupille puisse passer dans la boucle et une position »haute« telle que la goupille ne puisse passer à travers la boucle, caractérisée par le fait que la susdite partie (b2) de la boucle éloignée des moyens d'articulation (R) est agencée de manière à venir au contact ou sensiblement au contact de l'axe (A) alors que la tête (4) de la goupille est elle-même en appui contre l'axe.


**Patentansprüche**

1. Sicherungsbolzen für eine Welle oder ein analoges Element, mit einem Bügel (B) und Mitteln (R) zum Anlenken des Bügels (B) am Sicherungsbolzen (G), derart, daß der Bügel (B) umgeklappt werden kann, so daß er die Welle (A) oder das analoge Element umgibt, mit welcher bzw. welchem der Sicherungsbolzen (G) in Eingriff steht, um einem Abziehen des Bolzens entgegenzuwirken, wobei die Anlenkmittel (R) des Bügels (B) so ausgebildet sind, daß sie zumindest zwei Positionen einnehmen können, nämlich eine erste bzw. »abgesenkte« Position, in welcher der Sicherungsbolzen (G) den Bügel (B) durchsetzen kann, und eine zweite bzw. »angehobene« Position, in welcher der Sicherungsbolzen (G) den Bügel (B) nicht durchsetzen kann, wobei das den Anlenkmitteln (R) gegenüberliegende Ende (e) des Sicherungsbolzens (G) gegen einen Teil des Bügels (B) zur Anlage kommt, und wobei die Anlenkmittel (R) ein bewegliches Lager (6, 6b) aufweisen, das zumindest in den beiden genannten Positionen angeordnet werden kann, und mit dem Lager (6, 6b) eine Schwenkachse (7) in Eingriff steht, die mit dem Bügel (B) fest verbunden ist, dadurch gekennzeichnet, daß das Lager (6, 6b) von zwei im wesentlichen parallelen Armen (8, 9, 8b, 9b) getragen ist, wobei die Anordnung so getroffen ist, daß in der zweiten bzw. »angehobenen« Position die Arme (8, 9, 8b, 9b) sich gegen eine Seite erstrecken, auf welcher das Lager (6, 6b) maximal vom gegenüberliegenden Ende (e) des Bolzens entfernt ist, während in der ersten »abgesenkten« Position die Arme (8, 9, 8b, 9b) gegenüber der »angehobenen« Position gedreht sind.

2. Sicherungsbolzen nach Anspruch 1, dadurch gekennzeichnet, daß die beiden das Lager (6) tragenden Arme (8, 9) am Sicherungsbolzen (G) angelenkt sind.

3. Sicherungsbolzen nach Anspruch 2, dadurch gekennzeichnet, daß die beiden Arme (8, 9) sich in der zweiten bzw. »angehobenen« Position im wesentlichen in der Längsrichtung des Sicherungsbolzens erstrecken.

4. Sicherungsbolzen nach Ansprüchen 2 oder 3, dadurch gekennzeichnet, daß die beiden Arme (8, 9) am Sicherungsbolzen in Sitzen (10, 11) angelenkt sind, die versetzt in einer Ebene (J) angeordnet sind, welche im wesentlichen orthogonal zu einer Ebene (Q) verläuft, die von den beiden Armen gleichen Abstand hat, wenn diese ihre »angehobene« Position einnehmen, derart, daß die Haltemittel (M) durch die Kombination der gegenseitigen Versetzung der Sitze (10, 11) und die Elastizität der Arme (8, 9) gebildet sind.

5. Sicherungsbolzen nach einem der vorhergehenden Ansprüche, dadurch gekennzeichnet, daß das Lager (6) durch Einrollen eines Drahtes zu benachbarten Windungen gebildet ist, wobei die beiden Arme (8, 9) mit dem Lager fest verbunden und durch zwei geradlinige Verlängerungen des Drahtes an den beiden Enden des Lagers gebildet sind.

6. Sicherungsbolzen nach Anspruch 1, dadurch gekennzeichnet, daß die beiden das Lager (6b) tragenden Arme (8b, 9b) an einem ihrer Enden (k) auf dem Sicherungsbolzen (Gb) insbesondere durch Schweißen verankert sind, wobei diese Arme (8b, 9b) biegeverformbar sind, so daß sie eine Verlagerung des Lagers zwischen der »abgesenkten« und der »angehobenen« Position ermöglichen, und wobei die Arme infolge ihrer Biegeelastizität außerhalb die Haltemittel (Mb) für das Lager (6b) in der »angehobenen« Position bilden.

7. Sicherungsbolzen nach einem der vorhergehenden Ansprüche, dadurch gekennzeichnet, daß die Arme (8, 9, 8b, 9b) in der ersten bzw. »abgesenkten« Position gegenüber der »angehobenen« Position um etwa 90° oder mehr verschwenkt sind.

8. Sicherungsbolzen nach einem der vorhergehenden Ansprüche, dadurch gekennzeichnet, daß er an seinem Ende (e), das dem mit den Anlenkmitteln versehenen Ende gegenüberliegt, eine Aussparung oder Absetzung (12, 12b, 12c) aufweist, die als Anschlag und als Aufnahme für einen Teil (5, 5b, 5c) des Bügels (B) dient, wenn der Sicherungsbolzen (G, Gb, Gc) den Bügel durchsetzt hat und die Anlenkmittel in ihre »angehobene« Position zurückgeführt sind.

9. Sicherungsbolzen nach Anspruch 1, dadurch gekennzeichnet, daß der von den Anlenkmitteln (R) entfernte Teil (b2) des Bügels (B) eine solche Form hat, daß in der Eingriffstellung des Sicherungsbolzens (G) mit der Welle (A) und bei um diese Welle umgelegten Bügel der von den Anlenkmitteln entfernte Teil (b2) des Bügels an der Welle (A) zur Anlage kommt und das von den Anlenkmitteln (R) entfernte Ende des Bolzens in einem ausreichenden Abstand (d) von der Außenfläche der Welle hält, für den Fall, daß der Sicherungsbolzen sich in seiner Längsrichtung in einem Sinn verlagert, in welchem die Anlenkmittel (R) von der Welle (A) entfernt werden.

10. Sicherungsbolzen nach Anspruch 9, der nahe seinem von den Anlenkmitteln entfernten Ende eine Aussparung oder einen Absatz zur Aufnahme eines Abschnittes des umgeschlagenen Bügels aufweist, dadurch gekennzeichnet, daß die Form des von den Anlenkmitteln (R) entfernten Teiles (b2) des Bügels so getroffen ist, daß der Anschlag dieses Teiles (b2) des Bügels an der Welle (A) es gestattet, die Ausnehmung (I) von der Oberfläche der Welle (A) in einem ausreichenden Abstand (h) nach außen zu halten, falls der Bolzen (G) sich in seiner Längsrichtung verlagert.

11. Sicherungsbolzen nach Anspruch 10, dadurch gekennzeichnet, daß die Form des Teiles (b2) des Bügels so getroffen ist, daß der der Welle nächstgelegene Rand der Ausnehmung (I) in einem Abstand (h) von zumindest 5 mm von der Oberfläche der Welle (A) gehalten wird.

12. Sicherungsbolzen nach einem der Ansprüche 9 bis 11, dadurch gekennzeichnet, daß der von den Anlenkmitteln entfernte Teil (b2) bezüglich einer die Längsachse des Bolzens (G) und die geometrische Achse der Welle (A) enthaltenden Ebene symmetrisch ist oder im wesentlichen symmetrisch ist.

13. Sicherungsbolzen nach Anspruch 10, dadurch gekennzeichnet, daß der Bügel (B) einen im wesentlichen geraden Abschnitt (b1) aufweist, der dazu bestimmt ist, in die Ausnehmung (I) einzutreten.

14. Sicherungsbolzen nach einem der Ansprüche 9 bis 13, dadurch gekennzeichnet, daß der von den Anlenkmitteln (R) entfernte Teil (b2) des Bügels bezüglich einer Mittellinie (t) der Bügelkontur eine Art Ausstülpung nach außen bildet, die an den Bügel über zwei nach außen konkave Bögen (16, 17) angeschlossen ist, welche mit ihrem konvexen Teil an die Fläche der Welle (A) anlegbar sind.

15. Sicherungsbolzen nach einem der Ansprüche 9 bis 14, dadurch gekennzeichnet, daß der von den Anlenkmitteln entfernte Teil (b2) des Bügels einen spitzen Winkel ($\alpha$) bildet und über zwei nach außen konvexe Bögen (23, 24) an zwei geradlinige Teile (18, 19) des Bügels angeschlossen ist, die parallel zur geometrischen Achse des Sicherungsbolzens sind.

16. Sicherungsbolzen nach Anspruch 15, bei dem die Anlenkmittel des Bügels so ausgebildet sind, daß sie eine »abgesenkte« Position einnehmen können, in welcher der Sicherungsbolzen den Bügel durchsetzen kann, und eine »angehobene« Position, in welcher der Bolzen den Bügel nicht durchsetzen kann, dadurch gekennzeichnet, daß der von den Anlenkmitteln (R) entfernte Teil (b2) des Bügels so ausgebildet ist, daß er mit der Welle (A) in Berührung oder im wesentlichen in Berührung kommt, wenn der Kopf (4) des Sicherungsbolzens seinerseits an der Welle anliegt.

**Claims**

1. A locking pin for a spindle or similar, provided with a loop (B) and pivoting means (R) for pivoting the loop (B) on the locking pin (G) so that said loop (B) may be brought back to surround the spindle (A) or similar, in which the locking (G) is engaged, so as to oppose removal of said locking pin, the loop pivoting means (R) being arranged so as to be able to assume at least two positions namely a first position or »low« position in which the locking pin (G) may pass through said loop (B) and a second position or »high« position in which the locking pin may not pass through the loop (B), the end (e) of the locking pin (G) opposite the pivoting means (R) then coming into abutment against a portion of the loop (B), said pivoting means (B) comprising a mobile bearing (6, 6b) capable of being placed at least in said two positions, in which bearing (6, 6b) is engaged a pivot pin (7) integral with the loop (B), characterized by the fact that the bearing (6, 6b) is supported by two substantially parallel arms (8, 9, 8b, 9b), the assembly being such that in the second position or »high« position the arms (8, 9, 8b, 9b) extend on one side which moves the bearing (6, 6b) to a maximum away from the opposite end (e) of the locking pin, whereas in the first »low« position, said arms (8, 9, 8b, 9b) have rotated with respect to the »high« position.

2. The locking pin according to claim 1, characterized by the fact that the two arms (8, 9) supporting the bearing (6) are pivoted to the locking pin (G).

3. The locking pin according to claim 2, characterized by the fact that the two arms (8, 9) extend in the second position or »high« position, substantially in the lingitudinal direction of the locking pin.

4. The locking pin according to claim 2 or 3, characterized by the fact that the two arms (8, 9) are pivoted to the locking pin in housings (10, 11) offset in a plane ($\Delta$) substantially orthogonal to a plane (Q) equidistant from the two arms when they occupy the »high« position so that the holding means (M) are formed by the combination of this offsetting of the housings (10, 11) and the resilience of the arms (8, 9).

5. The locking pin according to any one of the preceding claims, characterized by the fact that the bearing (6) is made by coiling a wire into turns placed side by side, the two arms (8, 9) being integral with the bearing and being made of two rectilinear extensions of the wire at both ends of the bearing.

6. The locking pin according to claim 1, characterized by the fact that the two arms (8b, 9b) supporting the bearing (6b) are anchored at one of their ends (k), particularly by welding, to the locking pin (Gb), these arms (8b, 9b) being deformable under flexion so as to allow movement of the bearing between the »low« position and the »high« position, said arms forming furthermore the means (Mb) for holding the bearing (6b) in the »high« position because of their resilience under flexion.

7. The locking pin according to any one of the preceding claims, characterized by the fact that in the first position or »low« position, the arms (8, 9; 8b, 9b) have rotated by about 90° or more with respect to the »high« position.

8. The locking pin according to any one of the preceding claims, characterized by the fact that it comprises, at its end (e) opposite that provided with the pivoting means, a recess or notch (12, 12b, 12c) adapted to serve as a stop and as a housing for a part (5, 5b, 5c) of said loop (B) when the locking pin (G, Gb, Gc) has passed through this loop and when the pivoting means have been brought back to their »high« position.

9. The locking pin according to claim 1, characterized in that the part (b2) of the loop (B) distant from the pivoting means (R), is such shaped that, when the locking pin (G) is engaged in the spindle (A) and when the loop has been brought back about this spindle, said part (b2) of the loop distant from the pivoting means is adapted to come into abutment against the spindle (A) and to hold the end of the locking pin, distant from the pivoting means (R), at a sufficient distance (d) from the outer surface of the spindle, should the locking pin move in its longitudinal direction, in a direction which moves the pivoting means (R) away from the spindle (A).

10. The locking pin according to claim 9, comprising, towards its end distant from the pivoting means, a recess or notch adapted to receive a zone of the loop when it is brought back, characterized by the fact that the shape of said part (b2) of the loop distant from the pivoting means (R) is such that the abutment of this part (b2) of the loop against the spindle (A) allows the recess (I) to be hold at a sufficient distance (h), towards the outside, from the surface of the spindle (A), during possible movement of the locking pin (G) in its lingitudinal direction.

11. The locking pin according to claim 10, characterized by the fact that the shape of said part (b2) of the loop is such that the edge of the recess (I) the nearest to the spindle is held at a distance (h) of at least five millimetres from the surface of the spindle (A).

12. The locking pin according to any one of claims 9 to 11, characterized by the fact that the part (b2) of the loop distant from the pivoting means is symmetrical or substantially symmetrical with respect to the plane passing through the longitudinal axis of the locking pin (G) and the geometric axis of the spindle (A).

13. The locking pin according to claim 10, characterized by the fact that the loop (B) comprises a substantially rectilinear zone (b1), intended to engage in the recess (I).

14. The locking pin according to any one of claims 9 to 13, characterized by the fact that the part (b2) of the loop distant from the pivoting means (R) forms a sort of projection, extending outwardly with respect to the general line (t) of the mean contour of the loop, this projection being connected to the loop by means of two arcs (16, 17) whose concavity is turned outwardly, these arcs being adapted to bear with their convex portion against the surface of the spindle (A).

15. The locking pin according to any one of claims 9 to 14, characterized by the fact that the part (b2) of the loop distant from the pivoting means forms an acute angle ($\alpha$) and is connected by two arcs (23, 24) whose convexity is turned outwardly, to two rectilinear parts (18, 19) of the loop parallel to the geometric axis of the locking pin.

16. The locking pin according to claim 15 and wherein the means for pivoting the loop are arranged so as to be able to assume a »low« position in which the locking pin may pass through the loop and a »high« position in which the locking pin cannot pass through the loop, characterized by the fact that said part (b2) of the loop distant from the pivoting means (R) is arranged so as to come into contact or substantially into contact with the spindle (A) whereas the head (4) of the locking pin itself bears against the spindle.

Fig.2.

Fig.3.

Fig.1.

Fig.4.

Fig.5.

Fig.6.

# Fig.8.

# Fig.7.

# Fig.13.

Fig.9.

Fig.10.

Fig.11.

Fig.12.